# EUROPEAN PATENT APPLICATION

(11) **EP 4 691 622 A1**
(43) Date of publication of application: **11.02.2026**
(21) Application number: 24780226.7
(22) Date of filing: 25.03.2024
(51) Int. Cl.: B01J 20/04, B01D 53/14, B01D 53/62, B01J 20/28, B01J 20/30, B01J 20/34

(54) **CO2 ADSORBENT-SUPPORTING HONEYCOMB STRUCTURE, METHOD FOR MANUFACTURING SAME, AND METHOD FOR RECOVERING CO2**

(30) Priority: 30.03.2023 JP 2023056762
(71) Applicant: NGK INSULATORS, LTD., Nagoya-shi, Aichi 4678530 (JP)
(72) Inventor: ONISHI, Harunobu, Nagoya-shi, Aichi 467-8530 (JP); KOBAYASHI, Yoshimasa, Nagoya-shi, Aichi 467-8530 (JP); KATSUDA, Yuji, Nagoya-shi, Aichi 467-8530 (JP)
(74) Representative: MERH-IP Matias Erny Reichl Hoffmann Patentanwälte PartG mbB
(86) International application number: PCT/JP2024/011776
(87) International publication number: WO 2024/204110

(57) **Abstract**

A honeycomb structure supporting CO₂ adsorbent includes: a honeycomb structure portion including partition walls extending from a first end surface to a second end surface and partitioning a plurality of cells which form fluid flow paths; and a layer of CO₂ adsorbent covering at least a part of a surface of the partition walls, the layer of CO₂ adsorbent including an alkali metal carbonate supported on a porous material containing one or more selected from zeolite, alumina, and silica, a total content of zeolite, alumina, and silica being 50% by mass or more in the porous material.

## Description

### FIELD OF THE INVENTION

The present invention is related to a honeycomb structure supporting CO₂ adsorbent and a method for manufacturing thereof. Further, the present invention is related to a method for recovering CO₂ using the honeycomb structure supporting the CO₂ adsorbent.

### BACKGROUND OF THE INVENTION

In order to realize a decarbonized society, there is a growing need for technology to capture and utilize carbon dioxide (CO₂) from the atmosphere and exhaust gases. A typical conventional CO₂ recovery technology is a temperature swing method, in which CO₂ is adsorbed using an amine-based material and then heated to desorb the CO₂. However, the temperature swing method has problems such as high energy consumption per unit amount of CO₂ recovered, resulting in high cost, and thermal degradation of the amine.

In order to solve such problems, the development of a humidity swing method in which the adsorbent that has adsorbed CO₂ is exposed to a high humidity environment to release CO₂ is under progress. The humidity swing method does not require heating of the CO₂ adsorbent, so it consumes less energy and is expected to lead to significant reductions in costs and energy consumption. Prior art documents related to the humidity swing method include the following.

Patent Literature 1 (Japanese Patent No. 6204333) discloses a technique in which carbon dioxide is absorbed into an absorbent containing a strongly basic ion exchange resin, and then the humidity of the absorbent is increased to release the carbon dioxide from the absorbent.

Non-Patent Document 1 (Xiaoyang Shi, Hang Xiao, Kohei Kanamori, Akio Yonezu, Klaus S. Lackner, Xi Chen, "Moisture-Driven CO2 Sorbents", Joule 4, 1823-1837, August 19, 2020) discloses that CO₂ was adsorbed and desorbed by a humidity swing using an adsorbent powder in which carbonate was supported on a porous carbon material (graphite).

Non-Patent Document 2 (Rafael Rodriguez-Mosqueda, Eddy A. Bramer, Gerrit Brem, "CO2 capture from ambient air using hydrated Na2CO3 supported on activated carbon honeycombs with application to CO2 enrichment in greenhouses", Chem. Eng. Sci. 189(2018) 114-122) discloses that a honeycomb monolith made of activated carbon was wash-coated with an aqueous solution of sodium carbonate to prepare a honeycomb monolith supporting sodium carbonate, and a CO₂ adsorption / desorption test was performed using a humidity swing.

### PRIOR ART

### Patent Literature

[Patent Literature 1] Japanese Patent No. 6204333

### Non- Patent Literature

[Non-Patent Literature 1] Xiaoyang Shi, Hang Xiao, Kohei Kanamori, Akio Yonezu, Klaus S. Lackner, Xi Chen, "Moisture-Driven CO2 Sorbents", Joule 4, 1823-1837, August 19, 2020
[Non-Patent Literature 2] Rafael Rodriguez-Mosqueda, Eddy A. Bramer, Gerrit Brem, "CO2 capture from ambient air using hydrated Na2CO3 supported on activated carbon honeycombs with application to CO2 enrichment in greenhouses", Chem. Eng. Sci. 189(2018) 114-122

### SUMMARY OF THE INVENTION

However, the technology described in Patent Literature 1 uses an ion exchange resin, and there is a concern that cracks may occur in the resin material if humidity swings are repeated to absorb and release CO₂. In addition, because the material is resin, it has low resistance to heat and ultraviolet rays, and there are concerns that it will have a short lifespan.

In Non-Patent Document 1, it is reported an adsorbent that uses more stable graphite. However, in actual tests in which adsorption and desorption were performed, the amount of CO₂ desorption was small. This is considered to be because graphite is hydrophobic and therefore has poor reactivity with H₂O, which prevents sufficient desorption of CO₂. In addition, the test was conducted using powdered graphite, but there is room for improvement in the CO₂ adsorption rate.

In Non-Patent Document 2, an adsorbent in which sodium carbonate is supported on a honeycomb monolith made of activated carbon is used, but the adsorption and desorption capacity is small, and sufficient capacity is not obtained for desorption even at 60 °C. This is considered to be due to the fact that activated carbon is hydrophobic and that the adsorbent cannot be utilized inside the partition walls of the honeycomb monolith.

In view of the above circumstances, an object of one embodiment of the present invention is to provide a honeycomb structure to which a CO₂ recovery method using a humidity swing system can be suitably applied. An object of another embodiment of the present invention is to provide a method for manufacturing such a honeycomb structure.

The present inventors have conducted intensive research to solve the above problems and have found that it is advantageous to at least partially cover the surface of the partition walls of a honeycomb structure with a layer of a CO₂ adsorbent comprising an alkali metal carbonate supported on a specified porous material. The present invention has been completed based on the above findings, and is exemplified as below.

### [Aspect 1]

A honeycomb structure supporting CO₂ adsorbent, comprising:
a honeycomb structure portion comprising partition walls extending from a first end surface to a second end surface and partitioning a plurality of cells which form fluid flow paths; and
a layer of CO₂ adsorbent covering at least a part of a surface of the partition walls, the layer of CO₂ adsorbent comprising an alkali metal carbonate supported on a porous material containing one or more selected from zeolite, alumina, and silica, a total content of zeolite, alumina, and silica being 50% by mass or more in the porous material.

### [Aspect 2]

The honeycomb structure supporting CO₂ adsorbent according to aspect 1, wherein an average thickness of the CO₂ adsorbent layer is 30 µm to 250 µm.

### [Aspect 3]

The honeycomb structure supporting CO₂ adsorbent according to aspect 1 or 2, wherein an open frontal area of the first end surface and the second end surface is 35% to 75%.

### [Aspect 4]

The honeycomb structure supporting CO₂ adsorbent according to any one of aspects 1 to 3, wherein a specific heat of the partition walls is 0.6 kJ/(kg·K) or more.

### [Aspect 5]

The honeycomb structure supporting CO₂ adsorbent according to any one of aspects 1 to 4, wherein an average thickness of the partition walls is 40 to 440 µm and a cell density of the partition walls is 20 to 200 cells/cm².

### [Aspect 6]

The honeycomb structure supporting CO₂ adsorbent according to any one of aspects 1 to 5, wherein an open frontal area of the first end surface and the second end surface is 35% to 75%, an average thickness of the partition walls is 40 to 440 µm, and a cell density of the partition walls is 20 to 200 cells/cm².

### [Aspect 7]

The honeycomb structure supporting CO₂ adsorbent according to any one of aspects 1 to 6, wherein the partition walls are made of ceramics.

### [Aspect 8]

A method for recovering CO₂, comprising a step of causing a first gas having a first humidity to flow into the first end surface or the second end surface of the honeycomb structure supporting CO₂ adsorbent according to any one of aspects 1 to 7, so that CO₂ in the first gas is captured by the CO₂ adsorbent while the first gas passes through the plurality of cells, and the first gas with a reduced CO₂ concentration is caused to flow out from the end surface opposite to the inlet side.

### [Aspect 9]

The method for recovering CO₂ according to aspect 8, comprising a step of causing a second gas having a second humidity higher than the first humidity, water, or a mixture thereof to flow into the first end surface or the second end surface of the honeycomb structure supporting CO₂ adsorbent, so that the CO₂ captured in the CO₂ adsorbent is desorbed from the CO₂ adsorbent while the second gas, the water or the mixture thereof passes through the plurality of cells and the second gas, the water or the mixture thereof with an increased CO₂ concentration is caused to flow out from the end surface opposite to the inlet side.

### [Aspect 10]

The method for recovering CO₂ according to aspect 9, wherein a temperature of the second gas, the water or the mixture thereof to be caused to flow into the first end surface or the second end surface of the honeycomb structure supporting CO₂ adsorbent is 5 to 90 °C.

### [Aspect 11]

A method for manufacturing a honeycomb structure supporting CO₂ adsorbent, comprising:
a step A1 of preparing a honeycomb structure portion comprising partition walls extending from a first end surface to a second end surface and partitioning a plurality of cells which form fluid flow paths;
a step A2 of preparing a CO₂ adsorbent comprising an alkali metal carbonate supported on a porous material containing one or more selected from zeolite, alumina, and silica, a total content of zeolite, alumina, and silica being 50% by mass or more in the porous material; and
a step A3 of covering at least a part of a surface of the partition walls with the CO₂ adsorbent.

### [Aspect 12]

The method for manufacturing a honeycomb structure supporting CO₂ adsorbent according to aspect 11, wherein the step A3 comprises a step of flowing a slurry containing the CO₂ adsorbent into the cells from the first end surface or the second end surface of the honeycomb structure portion.

### [Aspect 13]

A method for manufacturing a honeycomb structure supporting CO₂ adsorbent, comprising:
a step B1 of preparing a honeycomb structure portion comprising partition walls extending from a first end surface to a second end surface and partitioning a plurality of cells which form fluid flow paths;
a step B2 of preparing a porous material containing one or more selected from zeolite, alumina, and silica, a total content of zeolite, alumina, and silica being 50% by mass or more in the porous material;
a step B3 of covering at least a part of a surface of the partition walls with the porous material; and
a step B4 of supporting an alkali metal carbonate on the porous material covering at least a part of the surface of the partition walls.

### [Aspect 14]

The method for manufacturing a honeycomb structure supporting CO₂ adsorbent according to aspect 13, wherein the step B3 comprises a step of flowing a slurry containing the porous material into the cells from the first end surface or the second end surface of the honeycomb structure portion.

### [Aspect 15]

The method for manufacturing a honeycomb structure supporting CO₂ adsorbent according to aspect 13 or 14, wherein the step B4 comprises a step of flowing the aqueous solution of the alkali metal carbonate into the cells from the first end surface or the second end surface of the honeycomb structure portion.

The honeycomb structure supporting CO₂ adsorbent according to one embodiment of the present invention has a layer of CO₂ adsorbent comprising an alkali metal carbonate supported on a specified porous material provided on the surface of the partition walls, and is therefore useful for improving the CO₂ adsorption and desorption capacity, making it possible to obtain a high CO₂ adsorption rate. In addition, since it has a honeycomb structure, the pressure loss compared to ion exchange resin, in which the gas flow passages are filled, is reduced. Therefore, the honeycomb structure supporting CO₂ adsorbent can be suitably applied in a CO₂ capture method using a humidity swing system.

### BRIEF DESCRIPTION OF THE DRAWINGS

FIG. 1 is a schematic perspective view of a honeycomb structure supporting CO₂ adsorbent according to one embodiment of the present invention.
FIG. 2 is a schematic view of a cross section parallel to the height direction (the direction in which the cells extend) of a honeycomb structure supporting CO₂ adsorbent according to one embodiment of the present invention.
FIG. 3 is a schematic partially enlarged view of the partition walls and the layer of CO₂ adsorbent of the honeycomb structure supporting CO₂ adsorbent, observed in a cross section perpendicular to the direction in which the cells 108 .
FIG. 4 is a graph showing the relationship between the elapsed time and the amount of CO₂ desorption when a CO₂ adsorbent having zeolite, silica gel, or activated carbon is used as a porous material.
FIG. 5 is a graph showing the relationship between the elapsed time and the amount of CO₂ adsorption when CO₂ is adsorbed using a honeycomb structure supporting CO₂ adsorbent and a powdered CO₂ adsorbent.
FIG. 6 is a graph showing the relationship between the average thickness of the layer of the CO₂ adsorbent and the amount of CO₂ adsorption.
FIG. 7 is a graph showing the relationship between the open frontal area of the first end surface and the second end surface, and the CO₂ adsorption amount.

### DETAILED DESCRIPTION OF THE INVENTION

Hereinafter, embodiments of the present invention will now be described in detail with reference to the drawings. It should be understood that the present invention is not intended to be limited to the following embodiments, and any change, improvement or the like of the design may be appropriately added based on ordinary knowledge of those skilled in the art without departing from the spirit of the present invention.

### (1. Honeycomb structure supporting CO₂ adsorbent)

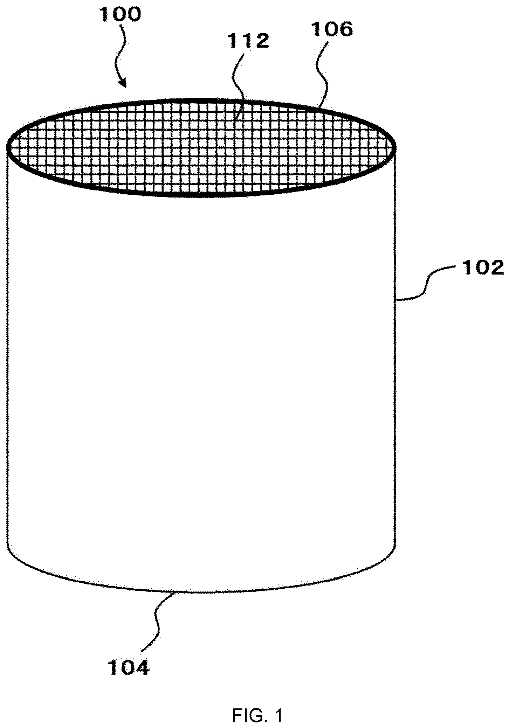

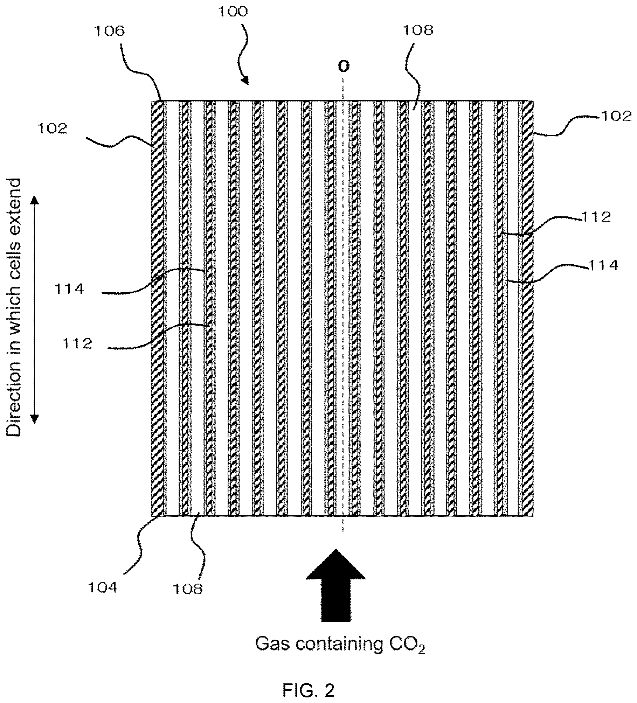

FIG. 1 shows a schematic perspective view of a honeycomb structure supporting CO₂ adsorbent according to one embodiment of the present invention. FIG. 2 shows a schematic view of a cross section parallel to the height direction (the direction in which the cells extend) of the honeycomb structure supporting CO₂ adsorbent shown in FIG. 1.

The honeycomb structure supporting CO₂ adsorbent 100 according to the embodiment of FIG. 1 comprises an outer peripheral side wall 102, and a honeycomb structure portion including partition walls 112 disposed on the inner side of the outer peripheral side wall 102, extending from a first end surface 104 to a second end surface 106, and partitioning a plurality of cells 108 that form fluid flow paths. The plurality of cells 108 are arranged in parallel to each other. The honeycomb structure supporting CO₂ adsorbent 100 according to this embodiment further comprises a layer of CO₂ adsorbent 114 that covers at least a part of the surface of the partition walls 112. The honeycomb structure supporting CO₂ adsorbent 100 in this embodiment is a flow-through type in which both ends of each cell 108 are open to the first end surface 104 and the second end surface 106, and a fluid flowing in from the inlet of a cell can pass through the cell and flow out from the outlet of the cell.

The shape of the end surfaces of the honeycomb structure supporting CO₂ adsorbent is not particularly limited, and can be, for example, a round shape such as a circle, an ellipse, a racetrack shape, or an oval shape, a polygonal shape such as a triangle or a quadrangle, or other irregular shape. The overall external shape of the honeycomb structure supporting CO₂ adsorbent can typically be a pillar shape. In the honeycomb structure supporting CO₂ adsorbent 100 shown in FIG. 1, the end surfaces have a circular shape, and it is cylindrical as a whole.

When the honeycomb structure supporting CO₂ adsorbent has a pillar shape, its height (the length from the first end surface to the second end surface) is not particularly limited and may be appropriately set depending on the application and required performance. There is no particular restriction on the relationship between the height of the honeycomb structure supporting CO₂ adsorbent and the maximum diameter of each end surface (the maximum length among the diameters passing through the center of gravity of each end surface of the columnar honeycomb structure). Therefore, the height of the honeycomb structure supporting CO₂ adsorbent may be longer than the maximum diameter of each end surface, or the height of the honeycomb structure supporting CO₂ adsorbent may be shorter than the maximum diameter of each end surface.

There is no particular limitation on the length in the cell extension direction (height direction) of the honeycomb structure supporting CO₂ adsorbent. However, while a longer length can increase the amount of supported CO₂ adsorbent , if the length is too long, the covering with the CO₂ adsorbent becomes difficult, so the length is preferably 50 to 300 mm, more preferably 60 to 270 mm, and even more preferably 70 to 250 mm.

There is no particular limitation on the maximum diameter of each end surface of the honeycomb structure supporting CO₂ adsorbent. However, while a larger maximum diameter allows the supported amount of CO₂ adsorbent to be increased, if the maximum diameter is too large, the covering with the CO₂ adsorbent becomes difficult, so the maximum diameter is preferably 50 to 250 mm, more preferably 60 to 230 mm, and even more preferably 70 to 200 mm.

### (1-1. Honeycomb structure portion)

The material constituting the partition walls and outer peripheral side walls of the honeycomb structure portion of the honeycomb structure supporting CO₂ adsorbent is not limited, and mention can be made to ceramics. As ceramics, mention can be made to cordierite, mullite, zircon, zirconium phosphate, aluminum titanate, silicon carbide (SiC), silicon-silicon carbide composites (e.g., Si-bonded SiC), cordierite-silicon carbide composites, zirconia, spinel, indialite, sapphirine, corundum, titania, silicon nitride, alumina, and silica-alumina. Further, for these ceramics, one type can be contained alone, or two or more types can be contained in combination.

In a preferred embodiment, the honeycomb structure portion is formed of ceramics containing 90% by mass or more of cordierite. This means that the total mass ratio of cordierite (2MgO · 2Al₂O₃ · 5SiO₂) in 100% by mass of the material constituting the honeycomb structure portion is 90% by mass or more. The mass ratio of cordierite in 100% by mass of the material constituting the honeycomb structure portion is more preferably 95% by mass or more, and even more preferably 99% by mass or more. It is also possible that 100% by mass of the material constituting the honeycomb structure portion is cordierite, excluding inevitable impurities.

The partition walls and the outer peripheral side walls of the honeycomb structure portion preferably have a high specific heat. This is because, after moisture is supplied into the cells in the process of desorbing CO₂, when the honeycomb structure supporting CO₂ adsorbent is dried, the temperature of the honeycomb structure portion decreases due to the heat of vaporization, and the drying time tends to become long. Specifically, the specific heat of the partition walls and outer peripheral side walls of the honeycomb structure portion is preferably 0.6 kJ/(kg·K) or more, more preferably 0.61 kJ/(kg·K) or more, and even more preferably 0.62 kJ/(kg·K) or more. No particular upper limit is set for the specific heat of the partition walls and outer peripheral side walls of the honeycomb structure section, but from the viewpoint of ease of manufacture, it is usually 1 kJ/(kg·K) or less, typically 0.95 kJ/(kg·K) or less, and more typically 0.9 kJ/(kg·K) or less. Therefore, the specific heat of the partition walls and outer peripheral side walls of the honeycomb structure portion is, for example, preferably 0.6 to 1 kJ/(kg·K), more preferably 0.61 to 0.95 kJ/(kg·K), and even more preferably 0.62 to 0.9 kJ/(kg·K). As a method for increasing the specific heat of the partition walls and the outer peripheral side walls of the honeycomb structure, for example, a method of using alumina as a material can be mentioned. For example, the partition walls and outer peripheral side walls of a honeycomb structure made of cordierite may have a specific heat of about 0.7 to 0.8 kJ/(kg·K). The partition walls and outer peripheral side walls of a honeycomb structure made of silicon-silicon carbide composite material may have a specific heat of about 0.63 to 0.73 kJ/(kg·K). A As used herein, the specific heat of the partition walls and the outer peripheral side walls of the honeycomb structure portion refers to the specific heat at 25 °C measured by a differential scanning calorimeter (DSC).

There is no particular restriction on the average thickness of the partition walls, but from the viewpoint of ensuring strength, it is preferably 40 µm or more, more preferably 45 µm or more, and even more preferably 50 µm or more. In addition, from the viewpoints of suppressing pressure loss and increasing the amount of supported CO₂ adsorbent, the average thickness of the partition walls is preferably 440 µm or less, more preferably 390 µm or less, and even more preferably 310 µm or less. Therefore, the average thickness of the partition walls is, for example, preferably from 40 to 440 µm, more preferably from 45 to 390 µm, and further preferably from 50 to 310 µm.

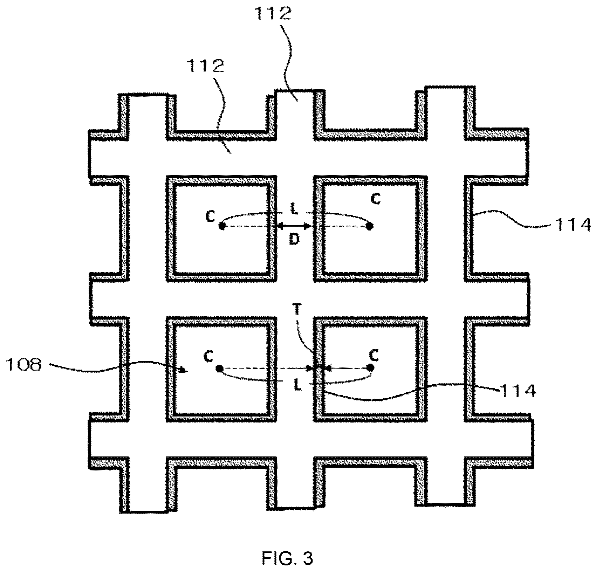

FIG. 3 shows a schematic partially enlarged view of the partition walls 112 and the layer of CO₂ adsorbent 114 of the honeycomb structure supporting CO₂ adsorbent 100, observed in a cross section perpendicular to the direction in which the cells 108 extend. As used herein, the thickness of the partition wall 112 refers to a crossing length of a line segment L that crosses the partition wall 112 when the centers of gravity C of adjacent cells 108 are connected by this line segment L in a cross-section orthogonal to the direction in which the cells 108 extend (the height direction if the honeycomb structure supporting CO₂ adsorbent is pillar-shaped). As used herein, the average thickness of the partition walls 112 refers to the average value of the thicknesses of all the partition walls 112 of the honeycomb structure supporting CO₂ adsorbent.

The partition walls can be porous. When the partition walls are porous, the average pore diameter thereof is preferably 0.5 µm or more, more preferably 0.7 µm or more, and further preferably 1 µm or more, from the viewpoint of enhancing adhesion to the layer of CO₂ adsorbent. In addition, from the viewpoint of ensuring strength, the average pore diameter of the partition walls is preferably 60 µm or less, more preferably 55 µm or less, and even more preferably 50 µm or less. Therefore, the average pore diameter of the partition walls is, for example, preferably from 0.5 to 60 µm, more preferably from 0.7 to 55 µm, and further preferably from 1 to 50 µm.

As used herein, the average pore diameter is measured by the mercury porosimetry using a mercury porosimeter in accordance with JIS R1655: 2003. A mercury porosimetry is a method in which a sample is immersed in mercury under a vacuum and a uniform pressure is applied. Mercury is forced into the sample while the pressure is gradually increased, and the pore diameter distribution is calculated from the pressure and the volume of mercury forced into the pores. When the pressure is gradually increased, mercury is injected into the pores starting from the larger diameter pores, increasing the cumulative volume of mercury. When all the pores are finally filled with mercury, the cumulative volume reaches an equilibrium amount. The accumulated volume at this time is the total pore volume (cm³/g), and the pore diameter at the time when a volume of mercury of 50% of the total pore volume is pressed in (D50) is defined as the average pore diameter.

When the partition walls are porous, the porosity of the partition walls is preferably 5% or more, more preferably 10% or more, and further preferably 15% or more, from the viewpoint of ensuring the amount of supported CO₂ adsorbent and from the viewpoint of keeping the pressure loss low when a fluid is caused to flow through the cells. Further, from the viewpoint of ensuring the strength of the honeycomb structure, the porosity of the partition walls is preferably 75% or less, more preferably 70% or less, and even more preferably 65% or less. Therefore, the porosity of the partition walls is, for example, preferably from 5 to 75%, more preferably from 10 to 70%, and even more preferably from 15 to 65%. As used herein, the porosity is measured by the mercury porosimetry using a mercury porosimeter in accordance with JIS R1655: 2003.

There is no particular restriction on the cell density (the number of cells per unit cross-sectional area), but from the viewpoint of improving the contact area between the adsorbent on the partition walls and the gas being passed, the cell density is preferably 20 cells/cm² or more, more preferably 25 cells/cm² or more, and even more preferably 30 cells/cm² or more. In addition, from the viewpoint of ensuring gas flow paths and reducing pressure loss, the cell density is preferably 200 cells/cm² or less, more preferably 195 cells/cm² or less, and even more preferably 190 cells/cm² or less. Therefore, the cell density is, for example, preferably from 20 to 200 cells/cm², more preferably from 25 to 195 cells/cm², and even more preferably from 30 to 190 cells/cm². As used herein, the cell density is calculated by dividing the number of cells in a honeycomb structure portion by the area of one end surface excluding the outer peripheral side wall of the honeycomb structure portion.

There is no limitation on the shape of the cells in a cross section perpendicular to the direction in which the cells extend (height direction of the honeycomb structure), but it is preferably a quadrangle, hexagon, octagon, or a combination thereof. Among these, square and hexagonal shapes are preferable. By using such a cell shape, pressure loss when a fluid is caused to flow through the honeycomb structure is reduced.

From the viewpoint of increasing the utilization rate of the CO₂ adsorbent, it is advantageous for the first end surface and the second end surface to have a large open frontal area (OFA). Therefore, the lower limit of the open frontal area at the first end surface and the second end surface of the honeycomb structure supporting CO₂ adsorbent is preferably 35% or more, more preferably 40% or more, even more preferably 50% or more, and even more preferably 60% or more. In addition, by increasing the open frontal area (OFA), it is possible to suppress pressure loss when a fluid is caused to flow through the cells. However, from the viewpoint of ensuring the strength of the honeycomb structure supporting CO₂ adsorbent and ensuring the CO₂ adsorption / desorption capacity per volume, it is preferable that the upper limit of the open frontal area at the first end surface and the second end surface be 75% or less, and it is more preferable that it be 70% or less. Therefore, the open frontal area of the first end surface and the second end surface is, for example, preferably 35 to 75%, more preferably 40 to 75%, even more preferably 50 to 70%, and even more preferably 60 to 70%. As used herein, the open frontal area at the first end surface and the second end surface of the honeycomb structure supporting CO₂ adsorbent is determined by the following method. Optical microscope photographs (size of one field of view: 6.1 mm × 4.6 mm, magnification: 50 times) of the first end surface and the second end surface of the honeycomb structure supporting CO₂ adsorbent are taken at five points on each end surface without bias. Each optical microscope photograph is binarized by image processing, the area of only the cell openings is calculated, and the open frontal area for each microscope photograph is determined by dividing it by the area of one field of view, and the average open frontal area for all the microscope photographs is taken as the measured value. It should be noted that the open frontal area is measured taking into consideration the layer of adsorbent. Accordingly, for example, as the thickness of the layer of adsorbent increases, the cell openings become smaller and the open frontal area also becomes smaller.

### (1-2. Layer of CO₂ adsorbent)

In one embodiment, the layer of CO₂ adsorbent 114 that covers at least a part of the surface of the partition walls 112 comprises an alkali metal carbonate supported on a porous material containing one or more selected from zeolite, alumina, and silica, a total content of zeolite, alumina, and silica being 50% by mass or more in the porous material. Zeolite, alumina and silica have a higher affinity for water than carbon, and therefore promote the desorption reaction of CO₂ even at low temperatures. Therefore, the layer of CO₂ adsorbent 114 containing a porous material with a total content of zeolite, alumina and silica of 50% by mass or more contributes to improving the adsorption and desorption capacity when a humidity swing is performed. The porous material may contain only one of zeolite, alumina and silica, or may contain two or three of them in combination.

The total content of zeolite, alumina and silica in the porous material is more preferably 70% by mass or more, even more preferably 90% by mass or more, and can also be 99% by mass or more (for example, 100% by mass excluding inevitable impurities).

The composition of the layer of CO₂ adsorbent may be specified based on the material composition when the material composition used to form the layer of adsorbent is known. However, if the material composition is unknown, a powdered sample of the layer of adsorbent (approximately 0.1 to 0.5 g) is taken and analyzed by an X-ray diffraction device (XRD, X-ray source: CuKα rays), and identified and quantified using ICDD data. In this case, zeolite is quantified by preparing a standard sample in which 90% by mass of a powdered sample of the adsorbent layer is mixed with 10% by mass of Si powder and subjecting it to XRD analysis and comparing the result with the result of XRD analysis of a powder sample (90% by mass of pure zeolite + 10% by mass of Si powder) separately prepared for comparison. Aluminum and silicon are quantified using a calibration curve method by inductively coupled plasma atomic emission spectrometry (ICP-AES), and aluminum is quantified as alumina and silicon is quantified as silica (however, the amount of zeolite quantified earlier is deducted).

Specific examples of the alkali metal carbonate include one or more selected from potassium carbonate, sodium carbonate, lithium carbonate, rubidium carbonate, cesium carbonate, and francium carbonate. Among these, it is preferable to use one or two selected from potassium carbonate and sodium carbonate, because they have high solubility in water and a small ionic radius, and therefore are unlikely to clog the pores of the base material even if the amount supported is increased. Alkali metal carbonates can efficiently chemically adsorb CO₂ in the presence of water vapor. For example, when sodium carbonate (Na₂CO₃) is used as the alkali metal carbonate, CO₂ is chemically adsorbed according to the reaction formula Na₂CO₃ + H₂O + CO₂ → 2NaHCO₃. In addition, when NaHCO₃ is present in the presence of a large amount of water vapor or water, the equilibrium shifts and CO₂ is released according to the reaction formula: 2NaHCO₃ →Na₂CO₃ +H₂O +CO₂, so that concentrated CO₂ can be recovered.

The average thickness of the layer of CO₂ adsorbent 114 is not limited, but from the viewpoint of increasing the amount of CO₂ adsorbent per volume of the honeycomb structure supporting CO₂ adsorbent, it is preferably 30 µm or more, more preferably 35 µm or more, and even more preferably 40 µm or more. However, if the layer of CO₂ adsorbent becomes too thick, it takes time for gas to diffuse within the adsorbent layer, and the CO₂ adsorption rate per unit mass of the CO₂ adsorbent and the CO₂ adsorption rate per unit volume of the honeycomb structure tend to decrease. For this reason, the average thickness of the layer of CO₂ adsorbent 114 is preferably 250 µm or less, more preferably 230 µm or less, and even more preferably 200 µm or less. Therefore, the average thickness of the layer of CO₂ adsorbent 114 is preferably, for example, 30 µm to 250 µm, more preferably 35 µm to 230 µm, and even more preferably 40 µm to 200 µm.

In this specification, the average thickness of the layer of CO₂ adsorbent 114 is measured by the following method. First, cross sections perpendicular to the direction in which the cells of the honeycomb structure supporting CO₂ adsorbent 100 extend are cut out at 1/4, 1/2, and 3/4 of the length in the direction in which the cells extend. By cutting at one location, two cross sections are obtained, but it is sufficient to use either one of the cross sections. Next, three cross sections cut out at 1/4, 1/2, and 3/4 of the length in the direction in which the cells extend are respectively photographed at three locations near the center of gravity of each cross section using an optical microscope (size of one field of view: 6.1 mm × 4.6 mm, magnification: 50x). The thickness of the layer of CO₂ adsorbent 114 is measured at five arbitrary points in each field of view. The thickness T of the layer of CO₂ adsorbent 114 at one point is defined as the length of the layer of CO₂ adsorbent 114 at either one of two locations intersected by a line segment L connecting the centers of gravity C of adjacent cells 108 with the line segment L (FIG. 3). Then, the average value of the thicknesses of the layer of CO₂ adsorbent 114 measured at the three cross sections is taken as the measured value.

It is sufficient that the layer of CO₂ adsorbent 114 cover at least a part of the surface of the partition walls 112. However, from the viewpoint of increasing the amount of CO₂ adsorbent per volume of the honeycomb structure supporting CO₂ adsorbent, it is preferable that the surface area ratio of the partition walls 112 covered with the CO₂ adsorbent is large. Specifically, the area ratio is preferably 40% or more, more preferably 60% or more, even more preferably 80% or more, and most preferably 100%.

In this specification, the area ratio of the surface of the partition walls 112 covered with the CO₂ adsorbent is measured by the following method. First, cross sections perpendicular to the direction in which the cells of the honeycomb structure supporting CO₂ adsorbent 100 extend are cut out at 1/4, 1/2, and 3/4 of the length in the direction in which the cells extend. By cutting at one location, two cross sections are obtained, but it is sufficient to use either one of the cross sections. Next, three cross sections cut out at 1/4, 1/2, and 3/4 of the length in the direction in which the cells extend are respectively photographed at three locations near the center of gravity of each cross section using an optical microscope (size of one field of view: 6.1 mm × 4.6 mm, magnification: 50x). In each field of view, the total length of the sides on the surfaces of the partition walls 112 partitioning any five cells 108 is measured, and the total value (total partition wall side length) is calculated. Next, among the surfaces of the partition walls 112 that partition the five cells 108, the total length of the sides of the surfaces of the partition walls 112 that are covered with the layer of CO₂ adsorbent are measured, and the total value (total covered partition wall side length) is calculated. Next, the total covered partition wall side length / total partition wall side length × 100(%) is calculated, and this is regarded as the surface area ratio of the partition wall covered by the CO₂ adsorbent in each field of view. Then, the average value of the surface area ratio in all fields of view measured in the three cross sections is regarded as the measured value for the entire honeycomb structure supporting CO₂ adsorbent.

### (2. Method for recovering CO₂)

According to one embodiment of the present invention, there is provided a method for recovering CO₂ using the honeycomb structure supporting CO₂ adsorbent according to the above-described embodiments. The honeycomb structure supporting CO₂ adsorbent according to the embodiments described above comprises a layer of the CO₂ adsorbent containing an alkali metal carbonate supported on a porous material as described above. Since the alkali metal carbonate supported on the porous material has the property of adsorbing CO₂ in a low humidity environment and desorbing CO₂ in a high humidity environment, the honeycomb structure supporting CO₂ adsorbent can be suitably applied to a CO₂ recovery method using a humidity swing method.

Therefore, according to one embodiment of the present invention, there is provided a method for recovering CO₂, comprising a step of causing a first gas having a first humidity to flow into the first end surface 104 or the second end surface 106 of the honeycomb structure supporting CO₂ adsorbent 100 according to the above-described embodiments, so that CO₂ in the first gas is captured by the CO₂ adsorbent while the first gas passes through the plurality of cells 108, and the first gas with a reduced CO₂ concentration is caused to flow out from the end surface opposite to the inlet side.

The first gas is not particularly limited as long as it is a gas containing CO₂, and examples thereof include environmental air (outdoor air, as well as indoor or room air), factory exhaust gas, ship exhaust gas, and power plant exhaust gas.

From the viewpoint of efficiently adsorbing CO₂, the first humidity of the first gas is preferably 0 to 50%, more preferably 3 to 45%, and even more preferably 5 to 40%, in terms of relative humidity (RH). From the viewpoint of efficiently adsorbing CO₂, the temperature of the first gas is preferably 0 to 90 °C, more preferably 5 to 85 °C, and even more preferably 10 to 80 °C.

Further, one embodiment of the present invention comprises a step of causing a second gas having a second humidity higher than the first humidity, water, or a mixture thereof to flow into the first end surface 104 or the second end surface 106 of the honeycomb structure supporting CO₂ adsorbent 100 according to the above-described embodiments, so that the CO₂ captured in the CO₂ adsorbent is desorbed from the CO₂ adsorbent while the second gas, the water or the mixture thereof passes through the plurality of cells 108 and the second gas, the water or the mixture thereof with an increased CO₂ concentration is caused to flow out from the end surface opposite to the inlet side.

The second gas having a second humidity higher than the first humidity is not particularly limited, but examples thereof include inert gases such as nitrogen, argon, and helium containing water vapor. The inert gas containing water vapor can be obtained by bubbling the inert gas through water. Because O₂ inhibits the reaction when CO₂ is used, the O₂ concentration in the second gas is preferably 2% by volume or less, more preferably 1% by volume or less, and even more preferably 0% by volume. The water may be liquid water, steam, or a combination thereof, for example low-temperature waste steam from a factory, for example waste steam at 90 °C or less. The second gas and water may be used in combination.

From the viewpoint of sufficiently desorbing CO₂, the second humidity of the second gas is preferably 50 to 100%, more preferably 55 to 100%, and even more preferably 60 to 100%, in terms of relative humidity (RH). In addition, from the viewpoint of increasing the saturated vapor pressure and efficiently desorbing CO₂, the temperature of the second gas, the water, or the mixture thereof is preferably 5 °C or more, more preferably 10 °C or more, and even more preferably 15 °C or more. From the viewpoint of energy saving, the temperature of the second gas, the water or the mixture thereof is preferably 90 °C or less, more preferably 85 °C or less, and even more preferably 80 °C or less. Therefore, the temperature of the second gas, the water or the mixture thereof is preferably from 5 to 90 °C, more preferably from 10 to 85 °C, and even more preferably from 15 to 85 °C.

In addition, although the method for recovering CO₂ using the humidity swing method has been described in detail here, the honeycomb structure supporting CO₂ adsorbent according to the above-mentioned embodiments can also be applied to a method for recovering CO₂ using a temperature swing method, and there is no problem in implementing a method for recovering CO₂ using the temperature swing method.

### (3. Method for manufacturing of honeycomb structure supporting CO₂ adsorbent)

A preferred example of the method for manufacturing the honeycomb structure supporting CO₂ adsorbent according to the present invention will be described below. In one embodiment, a method for manufacturing a honeycomb structure supporting CO₂ adsorbent according to the present invention comprises: a step A1 of preparing a honeycomb structure portion comprising partition walls extending from a first end surface to a second end surface and partitioning a plurality of cells which form fluid flow paths; a step A2 of preparing a CO₂ adsorbent comprising an alkali metal carbonate supported on a porous material containing one or more selected from zeolite, alumina, and silica, a total content of zeolite, alumina, and silica being 50% by mass or more in the porous material; and a step A3 of covering at least a part of a surface of the partition walls with the CO₂ adsorbent.

### (Step A1)

In the step A1, a honeycomb structure portion comprising partition walls extending from a first end surface to a second end surface and partitioning a plurality of cells which form fluid flow paths is prepared. Such a honeycomb structure portion itself may be manufactured by any known manufacturing method, and a method for manufacturing a ceramic honeycomb structure portion will be described below as an example.

In one embodiment, a method for manufacturing a honeycomb structure portion made of ceramic includes a step of manufacturing a honeycomb formed body having an outer peripheral side wall and partition walls provided on the inner side of the outer peripheral side wall and partitioning a plurality of cells extending from a first end surface to a second end surface, and a step of sequentially drying, degreasing, and firing the honeycomb formed body.

The honeycomb formed body can be prepared by kneading a raw material composition containing a ceramic raw material, a dispersion medium, a pore-forming material, and a binder to form a green body, and then extrusion molding the green body. Additives such as dispersants can be mixed into the raw material composition as necessary. In the extrusion molding, a die having a desired overall shape, cell shape, partition wall thickness, cell density, and the like can be used.

The ceramic raw material is a raw material for a portion that remains after firing and constitutes the skeleton of the honeycomb structure portion as ceramics. The ceramic raw material can be provided in the form of, for example, powder. As the ceramic raw material, mention can be made to raw materials for obtaining ceramics such as cordierite, mullite, zircon, zirconium phosphate, aluminum titanate, silicon carbide (SiC), silicon-silicon carbide composite materials (for example, Si-bonded SiC), cordierite-silicon carbide composite materials, zirconia, spinel, indialite, sapphirine, corundum, titania, silicon nitride, alumina, silica-alumina, and the like. Specific examples include, but are not limited to, silica, talc, aluminum hydroxide, alumina, kaolin, serpentine, pyroferrite, brucite, boehmite, mullite, and magnesite, and the like. As the ceramic raw material, one type can be used alone, and two or more types can be used in combination.

The pore-forming material is not particularly limited as long as it becomes pores after firing, and examples thereof include wheat flour, starch, foamed resin, water-absorbing resin, silica gel, carbon (for example, graphite), ceramic balloons, polyethylene, polystyrene, polypropylene, nylon, polyester, acrylic, phenol, and the like. As the pore-forming material, one type can be used alone, and two or more types can be used in combination. From the viewpoint of increasing the porosity of the honeycomb structure, the content of the pore-forming material is preferably 0.5 parts by mass or more, more preferably 2 parts by mass or more, and even more preferably 3 parts by mass, with respect to 100 parts by mass of the ceramic raw material. From the viewpoint of ensuring the strength of the honeycomb structure, the content of the pore-forming material is preferably 10 parts by mass or less, more preferably 7 parts by mass or less, and even more preferably 4 parts by mass or less, with respect to 100 parts by mass of the ceramic raw material.

Examples of the binder include organic binders such as methyl cellulose, hydroxypropoxyl cellulose, hydroxyethyl cellulose, carboxymethyl cellulose, and polyvinyl alcohol, and the like. In particular, it is preferable to use methyl cellulose and hydroxypropoxyl cellulose in combination. In addition, from the viewpoint of increasing the strength of the honeycomb formed body, the binder content is preferably 4 parts by mass or more, more preferably 5 parts by mass or more, and even more preferably 6 parts by mass or more, with respect to 100 parts by mass of the ceramic raw material. From the viewpoint of suppressing cracks due to abnormal heat generation during the firing process, the content of the binder is preferably 9 parts by mass or less, more preferably 8 parts by mass or less, and even more preferably 7 parts by mass or less, with respect to 100 parts by mass of the ceramic raw material. As the binder, one type can be used alone, and two or more types can be used in combination.

The dispersant may be a surfactant such as ethylene glycol, dextrin, fatty acid soap, polyalcohol, and the like. As the dispersant, one type can be used alone, and two or more types can be used in combination. The content of the dispersant is preferably 0 to 2 parts by mass with respect to 100 parts by mass of the ceramic raw material.

The dispersion medium may be water or a mixed solvent of water and an organic solvent such as alcohol, with water being particularly preferred.

The water content of the honeycomb formed body before the drying process is preferably 20 to 90 parts by mass, more preferably 60 to 85 parts by mass, and even more preferably 70 to 80 parts by mass, with respect to 100 parts by mass of the ceramic raw material. By setting the water content of the honeycomb formed body to 20 parts by mass or more with respect to 100 parts by mass of the ceramic raw material, it is easy to obtain an advantage that the quality of the honeycomb formed body is easily stabilized. When the water content of the honeycomb formed body is 90 parts by mass or less with respect to 100 parts by mass of the ceramic raw material, the amount of shrinkage during drying is small, and deformation can be suppressed. As used herein, the water content of the honeycomb formed body refers to a value measured by a loss on drying method.

After drying the honeycomb formed body, degreasing and firing are carried out to obtain a honeycomb structure portion. The conditions for the drying, degreasing and firing steps may be any known conditions depending on the material composition of the honeycomb formed body, and no particular explanation is required, but specific examples of the conditions are given below.

In the drying step, for example, a conventionally known drying method such as hot gas drying, microwave drying, dielectric drying, reduced pressure drying, vacuum drying, freeze drying, and the like can be used. Among these, a drying method that combines hot gas drying with microwave drying or dielectric drying is preferred, since it is possible to dry the entire formed body quickly and uniformly.

Next, the degreasing step will be described. The combustion temperature of the binder is about 200 °C, and the combustion temperature of the pore-forming agent is about 300 to 1000 °C. Therefore, the degreasing step may be carried out by heating the honeycomb formed body to a temperature in the range of about 200 to 1000 °C. The heating time is not particularly limited, but is usually about 10 to 100 hours. The honeycomb formed body after the degreasing step is called a calcined body.

The firing step depends on the material composition of the honeycomb formed body, but can be carried out, for example, by heating the calcined body to 1350 to 1600 °C and holding it for 3 to 10 hours.

### (Step A2)

In the step A2, a CO₂ adsorbent comprising an alkali metal carbonate supported on a porous material containing one or more selected from zeolite, alumina, and silica, a total content of zeolite, alumina, and silica being 50% by mass or more in the porous material is prepared. The porous material may contain only one of zeolite, alumina and silica, or may contain two or three of them in combination.

The porous zeolite can be provided in the form of, for example, a powder, but is not limited thereto. Porous zeolite having an average pore diameter of 0.1 to 2 nm, a BET specific surface area of 30 to 1500 m²/g, and a median diameter (D50) of 0.1 to 200 µm can be preferably used, porous zeolite having an average pore diameter of 0.15 to 1.8 nm, a BET specific surface area of 40 to 1400 m²/g, and a median diameter (D50) of 0.5 to 100 µm can be more preferably used, and porous zeolite having an average pore diameter of 0.2 to 1.5 nm, a BET specific surface area of 50 to 1300 m²/g, and a median diameter (D50) of 0.7 to 80 µm can be even more preferably used.

The porous alumina can be provided in the form of, for example, a powder, and is not limited thereto. Porous alumina having an average pore diameter of 0.5 to 100 nm, a BET specific surface area of 1 to 1000 m²/g, and a median diameter (D50) of 0.1 to 200 µm can be preferably used, porous alumina having an average pore diameter of 0.7 to 90 nm, a BET specific surface area of 3 to 950 m²/g, and a median diameter (D50) of 0.5 to 100 µm can be more preferably used, and porous alumina having an average pore diameter of 1 to 80 nm, a BET specific surface area of 5 to 900 m²/g, and a median diameter (D50) of 0.7 to 80 µm can be even more preferably used.

The porous silica can be provided in the form of, for example, a powder, and is not limited thereto. Porous silica having an average pore diameter of 0.5 to 100 nm, a BET specific surface area of 30 to 1500 m²/g, and a median diameter (D50) of 0.1 to 200 µm can be preferably used, porous silica having an average pore diameter of 0.7 to 90 nm, a BET specific surface area of 40 to 1400 m²/g, and a median diameter (D50) of 0.5 to 100 µm can be more preferably used, and porous silica having an average pore diameter of 1 to 80 nm, a BET specific surface area of 50 to 1300 m²/g, and a median diameter (D50) of 0.7 to 80 µm can be even more preferably used. As the porous silica, silica gel is preferably used.

In this specification, the average pore diameter (L) of a porous material is calculated from the BET specific surface area (A) calculated by a multipoint method using the BET equation based on the nitrogen gas adsorption isotherm, and the pore volume (V) calculated by BJH analysis, according to the relational equation L = 4V / A.

In this specification, the BET specific surface area of the porous material is calculated by a multipoint method using the BET equation based on the nitrogen gas adsorption isotherm.

In this specification, the median diameter (D50) of the porous material is determined from a volume-based cumulative particle size distribution obtained by a laser diffraction / scattering method.

As an example of a method for supporting an alkali metal carbonate on a porous material, there is a method in which a powder of the porous material and an aqueous solution of the alkali metal carbonate are mixed with stirring to form a slurry, and then the resulting slurry is dried. The drying method may be, for example, a vacuum drying method. The temperature during drying is not particularly limited, but may be 20 to 200 °C. After drying, a CO₂ adsorbent containing an alkali metal carbonate supported on a porous material is obtained.

The mass ratio of the alkali metal carbonate to the porous material in the CO₂ adsorbent can be, for example, alkali metal carbonate : porous material = 0.5:10 to 7:10, preferably 0.7:10 to 6.5:10, and more preferably 1:10 to 6:10.

### (Step A3)

In the step A3, at least a part of a surface of the partition walls is covered with the CO₂ adsorbent. An example of such a covering method is a method in which a slurry containing the CO₂ adsorbent is prepared by dispersing the CO₂ adsorbent in a solvent, the slurry is brought into contact with the surface of the partition wall, and then the slurry is dried. As the solvent, alcohols such as ethanol, isopropanol, butanol, and other organic solvents can be suitably used. An example of a method for contacting the slurry with the surface of the partition walls is to make the slurry flow into the cells from the first end surface or the second end surface of the honeycomb structure portion by, for example, immersing the honeycomb structure portion in the slurry. The drying method may be, for example, a vacuum drying method. The temperature during drying is not particularly limited, but may be from 20 to 200 °C.

In another embodiment according to the present invention, a method for manufacturing a honeycomb structure supporting CO₂ adsorbent comprises: a step B1 of preparing a honeycomb structure portion comprising partition walls extending from a first end surface to a second end surface and partitioning a plurality of cells which form fluid flow paths; a step B2 of preparing a porous material containing one or more selected from zeolite, alumina, and silica, a total content of zeolite, alumina, and silica being 50% by mass or more in the porous material; a step B3 of covering at least a part of a surface of the partition walls with the porous material; and a step B4 of supporting an alkali metal carbonate on the porous material covering at least a part of the surface of the partition walls.

### (Step B1)

The step B1 is the same as the step A1 described above, so a description thereof will be omitted.

### (Step B2)

In the step B2, a porous material containing one or more selected from zeolite, alumina, and silica, a total content of zeolite, alumina, and silica being 50% by mass or more in the porous material is prepared. As the porous material, the porous material described in the step A2 can be suitably used.

### (Step B3)

In the step B3, at least a part of a surface of the partition walls is covered with the porous material. Examples of such a coating method include a method in which a porous material is stirred and dispersed in a solvent to prepare a slurry containing the porous material, the slurry is brought into contact with the surface of the partition walls, and then the slurry is dried. As the solvent, alcohols such as ethanol, isopropanol, butanol, other organic solvents, or water can be suitably used. As an example of a method for contacting the slurry with the surface of the partition walls, there is a method in which the slurry is flowed into the cells from the first end surface or the second end surface of the honeycomb structure portion by, for example, immersing the honeycomb structure portion in the slurry. The drying method may be, for example, a vacuum drying method. The temperature during drying is not particularly limited, but may be from 20 to 200 °C.

### (Step B4)

In the step B4, an alkali metal carbonate is supported on the porous material covering at least a part of the surfaces of the partition walls of the honeycomb structure portion. As a method for supporting the alkali metal carbonate on the porous material, for example, there is a method in which an aqueous solution of the alkali metal carbonate is brought into contact with the surface of the partition walls, and then the aqueous solution is dried. As an example of a method for contacting the aqueous solution with the surface of the partition walls, there is a method in which the aqueous solution is flowed into the cells from the first end surface or the second end surface of the honeycomb structure portion by, for example, immersing the honeycomb structure portion in the aqueous solution. The drying method may be, for example, a vacuum drying method. The temperature during drying is not particularly limited, but may be 20 to 200 °C. After drying, a CO₂ adsorbent containing an alkali metal carbonate supported on the porous material is obtained.

The mass ratio of the alkali metal carbonate to the porous material in the CO₂ adsorbent can be, for example, alkali metal carbonate : porous material = 0.5:10 to 7:10, preferably 0.7:10 to 6.5:10, and more preferably 1:10 to 6:10.

### EXAMPLES

Hereinafter, the examples are provided to better understand the present invention and its advantages, but the present invention is not limited to these examples.

### <Test I. Test on the effect of the type of porous material on the amount of CO₂ desorption>

### (1. Preparation of honeycomb structure portion)

For the laboratory tests, a sufficient number of honeycomb structure portions made of cordierite of a rectangular parallelepiped shape measuring 20 mm × 20 mm × height (length of extension of the cells) of 10 mm and having both ends opened were prepared for each of the tests described below. The honeycomb structure portions had an average partition wall thickness of 10 mil (254 µm), an average partition wall pore diameter of 11 µm, a partition wall porosity of 56%, and a cell density of 300 cells/in² (47 cells/cm²). The honeycomb structure portions had a square cell cross-sectional shape and a specific heat of 0.76 kJ/(kg·K).

### (2. Preparation of CO₂ adsorbent)

As the porous material, the following three types (commercially available products) were prepared:
(a) Zeolite: average pore diameter 0.9 nm, BET specific surface area 630 m²/g, median diameter (D50) 6 µm, content 95% by weight or more
(b) Silica gel: average pore diameter 6.0 nm, BET specific surface area 500 m²/g, median diameter (D50) 10 µm, content 100% by weight
(c) Activated carbon: average pore diameter 3.0 nm, BET specific surface area 1500 m²/g, median diameter (D50) not measured, content 100% by weight

### [2-1. Preparation of CO₂ adsorbent A]

To 10 g of the above zeolite, 12 mL of a 1 M Na₂CO₃ aqueous solution was added dropwise, stirred to form a slurry, and then vacuum dried at room temperature for 72 hours to obtain a powdered CO₂ adsorbent A. The mass ratio of Na₂CO₃ to zeolite in the CO₂ adsorbent A was Na₂CO₃ : zeolite = 1.3 : 10.

### [2-2. Preparation of CO₂ adsorbent B]

To 10 g of the above silica gel, 12 mL of a 1 M Na₂CO₃ aqueous solution was added dropwise, stirred to form a slurry, and then vacuum dried at room temperature for 72 hours to obtain a powdered CO₂ adsorbent B. The mass ratio of Na₂CO₃ to silica gel in the CO₂ adsorbent B was Na₂CO₃ : silica gel = 1.3 : 10.

### [2-3. Preparation of CO₂ adsorbent C]

To 10 g of the activated carbon, 12 mL of a 1 M Na₂CO₃ aqueous solution was added dropwise, stirred to form a slurry, and then vacuum dried at room temperature for 72 hours to obtain a powdered CO₂ adsorbent C. The mass ratio of Na₂CO₃ to activated carbon in the CO₂ adsorbent C was Na₂CO₃ : silica gel = 1.3 : 10.

### (3. Preparation of honeycomb structure supporting CO₂ adsorbent)

### [3-1. Preparation of honeycomb structure A supporting CO₂ adsorbent A]

The CO₂ adsorbent A prepared above was added to ethanol so as to obtain a concentration of 20% by mass and stirred to form a slurry. The honeycomb structure portion obtained above was immersed in the slurry, and after 1 minute, it was pulled out and vacuum dried at room temperature for 24 hours. Thereafter, the same immersion and drying process was carried out again to prepare a honeycomb structure A supporting the CO₂ adsorbent A. The average thickness of the layer of the CO₂ adsorbent A was 46 µm. The area ratio of the partition wall surface covered with the CO₂ adsorbent A was 97%. The amount of the CO₂ adsorbent A supported on the honeycomb structure A was about 0.5 g. The honeycomb structure A had an open frontal area of 58% at the first end surface and the second end surface.

### [3-2. Preparation of honeycomb structure B supporting CO₂ adsorbent B]

The CO₂ adsorbent B prepared above was added to ethanol so as to obtain a concentration of 20% by mass and stirred to form a slurry. The honeycomb structure portion obtained above was immersed in the slurry, and after 1 minute, it was pulled out and vacuum dried at room temperature for 24 hours. Thereafter, the same immersion and drying process was carried out again to prepare a honeycomb structure B supporting the CO₂ adsorbent B. The average thickness of the layer of the CO₂ adsorbent B was 52 µm. The area ratio of the partition wall surface covered with the CO₂ adsorbent B was 96%. The amount of the CO₂ adsorbent B supported on the honeycomb structure B was about 0.5 g. The honeycomb structure B had an open frontal area of 57% at the first end surface and the second end surface.

### [3-3. Preparation of honeycomb structure C supporting CO₂ adsorbent C]

The CO₂ adsorbent C prepared above was added to ethanol so as to obtain a concentration of 20% by mass and stirred to form a slurry. The honeycomb structure portion obtained above was immersed in the slurry, and after 1 minute, it was pulled out and vacuum dried at room temperature for 24 hours. Thereafter, the same immersion and drying process was carried out again to prepare a honeycomb structure C supporting the CO₂ adsorbent C. The average thickness of the layer of the CO₂ adsorbent C was 56 µm. The area ratio of the partition wall surface covered with the CO₂ adsorbent C was 95%. The amount of the CO₂ adsorbent C supported on the honeycomb structure C was about 0.5 g. The honeycomb structure C had an open frontal area of 56% at the first end surface and the second end surface.

### (4. CO₂ adsorption / desorption test)

For each of the honeycomb structures A, B, and C obtained above, a CO₂ adsorption / desorption test was carried out using the following test apparatus. The test apparatus had a 12 L chamber equipped with an air inlet, an air outlet, a fan, a CO₂ concentration meter, and a temperature and humidity meter. An air circulation system was connected to this chamber, and the piping was configured such that air that flowed into the chamber from the air inlet passed through the chamber, flowed out from the air outlet, and was then pumped back into the chamber by a circulation pump. A humidifier and a dehumidifier were installed in parallel in the circulation system, making it possible to change the humidity of the air flowing into the chamber.

The test procedure was as follows. The honeycomb structure to be tested was placed in the chamber. With the fan rotating at 5 W to agitate the air in the chamber, humidified air with a relative humidity of 90% or more and a temperature of approximately 27 °C was circulated into the chamber at a flow rate of 12 L/min using the circulation pump, such that CO₂ was desorbed from the honeycomb structure for 30 minutes (first desorption process). Next, with the fan rotating at 5 W to agitate the air in the chamber, dry air with a relative humidity of approximately 5% and a temperature of approximately 28 °C was circulated into the chamber from the air inlet at a flow rate of 12 L/min using the circulation pump, and CO₂ was adsorbed into the honeycomb structure for 120 minutes. After CO₂ adsorption, while the fan was rotating at 5 W to agitate the air in the chamber, humidified air with a relative humidity of 90% or more and a temperature of approximately 27 °C was circulated into the chamber at a flow rate of 12 L/min using the circulation pump, and CO₂ was desorbed from the honeycomb structure for 30 minutes (second desorption process). When the second CO₂ desorption process was performed, the relationship between the elapsed time during CO₂ desorption and the amount of CO₂ desorption was calculated from the change in CO₂ concentration in the chamber.

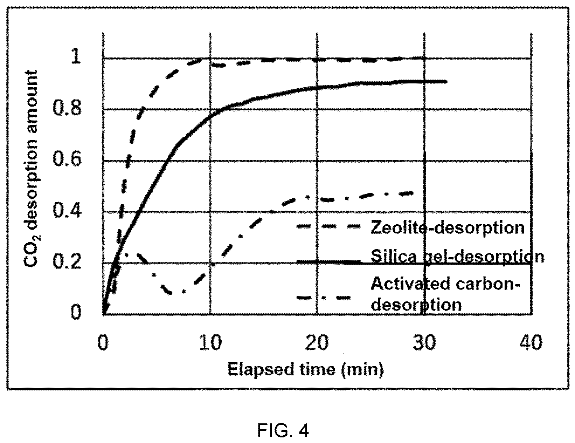

The relationship between the elapsed time in the second desorption process and the amount of CO₂ desorption (molar number) per unit mass of the adsorbent is shown in FIG. 4. The amount of CO₂ desorption was standardized by setting the amount of CO₂ desorbed from honeycomb structure A supporting the CO₂ adsorbent A using zeolite as a porous material after 30 minutes as 1. Further, Table 1 also shows the amount of CO₂ desorption 10 minutes after the start of desorption (10 min desorption amount) and the ratio of the amount of CO₂ desorption 10 minutes after the start of desorption to the amount of CO₂ desorption 30 minutes after the start of desorption (10 min / 30 min desorption amount ratio). From these results, it can be seen that honeycomb structure C, which supported CO₂ adsorbent C using activated carbon as the porous material, had a significantly slower desorption rate than honeycomb structure A (porous material: zeolite) and honeycomb structure B (porous material: silica gel).

**Table 1**

| Test subject | Porous materials | 10 min desorption amount | 10 min / 30 min desorption amount ratio |
|---|---|---|---|
| Honeycomb strucure A | Zeolite | 0.98 | 98% |
| Honeycomb strucure B | Silica gel | 0.77 | 85% |
| Honeycomb strucure C | Activated carbon | 0.18 | 38% |

### <Test II. Study on the effect of supporting a CO₂ adsorbent on a honeycomb structure>

### (1. Measurement of CO₂ adsorption rate by honeycomb structure B supporting CO₂ adsorbent B)

A honeycomb structure B supporting the CO₂ adsorbent B using silica gel as a porous material as described in Test I was prepared. A CO₂ adsorption test was performed using the honeycomb structure B and the same test apparatus as in Test I. The test procedure was as follows. The honeycomb structure B was placed in the chamber. With the fan rotating at 5 W to agitate the air in the chamber, humidified air with a relative humidity of 90% or more and a temperature of about 27 °C was circulated in the chamber at a flow rate of 12 L/min by the circulation pump, and CO₂ was desorbed from the honeycomb structure B for 30 minutes (desorption process). Next, with the fan rotating at 5 W to agitate the air in the chamber, dry air with a relative humidity of about 5% and a temperature of about 28 °C was circulated from the air inlet into the chamber at a flow rate of 12 L/min, and CO₂ was adsorbed into the honeycomb structure B for 120 minutes (adsorption process). The time change in the amount of CO₂ adsorption during the adsorption process was calculated from the change in CO₂ concentration in the chamber.

### (2. Measurement of CO₂ adsorption rate by powdered CO₂ adsorbent B)

A powdered CO₂ adsorbent B containing silica gel as described in Test I was prepared. A CO₂ adsorption test was carried out on the CO₂ adsorbent B using the same test equipment as in Test I. The test procedure was as follows. A powder of CO₂ adsorbent B (about 0.5 g) was placed in a petri dish with an inner diameter of 50 mm and tapped several times. Next, the petri dish was placed in the chamber. With the fan rotating at 5 W to agitate the air in the chamber, humidified air with a relative humidity of 90% or more and a temperature of about 27 °C was circulated in the chamber at a flow rate of 12 L/min by the circulation pump, and CO₂ was desorbed from the CO₂ adsorbent B for 30 minutes (desorption process). Next, with the fan rotating at 5 W to agitate the air in the chamber, dry air with a relative humidity of about 5% and a temperature of about 28 °C was circulated from the air inlet into the chamber at a flow rate of 12 L/min, and CO₂ was adsorbed into the CO₂ adsorbent B for 120 minutes (adsorption process). The change in the amount of CO₂ adsorption over time during the adsorption process was calculated from the change in CO₂ concentration in the chamber.

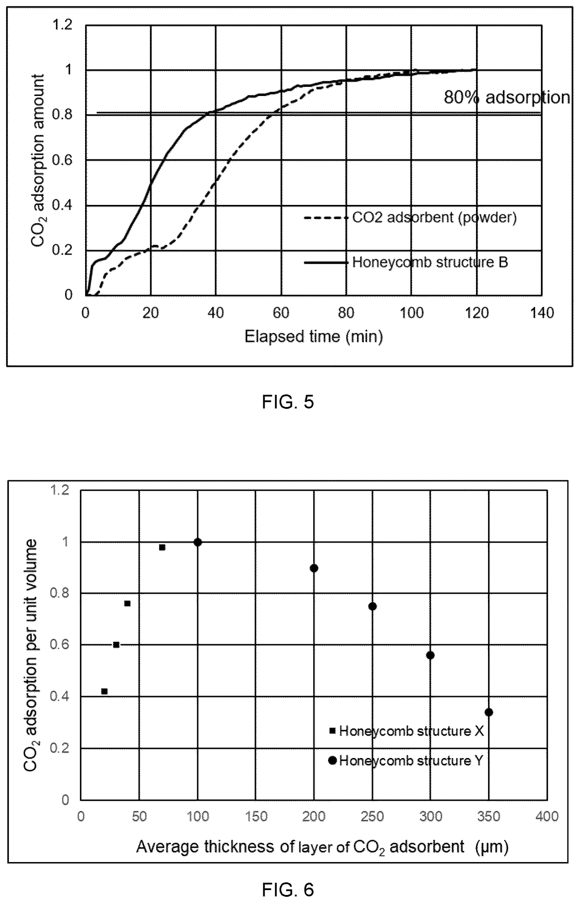

The results are shown in FIG. 5. The CO₂ adsorption amount (molar number) per unit mass of the adsorbent was standardized by setting the CO₂ adsorption amount of honeycomb structure B after 120 minutes as 1. Further, the time required to reach 80% of the CO₂ adsorption amount 120 minutes after the start of adsorption (80% adsorption time) is shown in Table 2. From this result, it is understood that the CO₂ adsorption rate of the honeycomb structure B supporting the CO₂ adsorbent B is remarkably higher than that of the powdered CO₂ adsorbent B.

**Table 2**

| Test subject | 80% adsorption time (min) |
|---|---|
| Honeycomb strucure B | 37 |
| CO₂ adsorbent B (powder) | 57 |

### <Test III. Relationship between thickness of layer of CO₂ adsorbent and CO₂ adsorption amount>

### (1. Preparation of honeycomb structure supporting CO₂ adsorbent using honeycomb structure portion X)

### [1-1. Preparation of honeycomb structure portion X]

For the laboratory tests, a sufficient number of honeycomb structure portions X made of cordierite of a rectangular parallelepiped shape measuring of 20 mm × 20 mm × height (length of extension of the cells) of 10 mm and having both ends opened were prepared for each of the tests described below. The honeycomb structure portions X had an average partition wall thickness of 2.5 mil (64 µm), an average partition wall pore diameter of 5 µm, a partition wall porosity of 47%, and a cell density of 900 cells/in² (140 cells/cm²). The honeycomb structure portions X had a square cell cross-sectional shape and had a specific heat of 0.76 kJ/(kg·K).

### [1-2. Preparation of honeycomb structure supporting CO₂ adsorbent B]

The CO₂ adsorbent B described in Test I was prepared, and added to ethanol so as to obtain a concentration of 20% by mass and was stirred to form a slurry. The honeycomb structure portion X obtained above was immersed in the slurry, and after 1 minute, it was pulled out and vacuum dried at room temperature for 24 hours. Thereafter, the same immersion and drying process was carried out again to prepare a honeycomb structure supporting the CO₂ adsorbent B. The average thickness of the layer of the CO₂ adsorbent B was 20 µm. The area ratio of the surface of the partition wall covered with the CO₂ adsorbent B was 93%. The amount of the CO₂ adsorbent B supported on the honeycomb structure was about 0.3 g. The honeycomb structure had an open frontal area of 77% at the first end surface and the second end surface.

In addition, honeycomb structures supporting CO₂ adsorbent B with average layer thicknesses of CO₂ adsorbent B of 30 µm, 40 µm, and 70 µm, respectively, were prepared under the same conditions as above, except that the number of times the immersion and drying process was repeated was changed.

For the honeycomb structure prepared as described above, the average thickness (Average thickness) of the layer of CO₂ adsorbent B, the surface area ratio (Coverage rate) of the partition walls covered by CO₂ adsorbent B, the amount of supported CO₂ adsorbent B (Adsorbent amount), and the open frontal area (Open frontal area) at the first end surface and the second end surface are shown in Table 3.

**Table 3**

| Average thickness (µm) | Coverage rate (%) | Adsorbent amount (g) | Open frontal area (%) |
|---|---|---|---|
| 20 | 93 | 0.3 | 77 |
| 30 | 92 | 0.5 | 73 |
| 40 | 93 | 0.7 | 69 |
| 70 | 95 | 1.2 | 58 |

### (2. Preparation of honeycomb structure supporting CO₂ adsorbent using honeycomb structure portion Y)

### [2-1. Preparation of honeycomb structure portion Y]

For the laboratory tests, a sufficient number of flow-through type honeycomb structure portions Y made of cordierite of a rectangular parallelepiped shape measuring 20 mm × 20 mm × height (cell extension length) 10 mm and having both ends opened were prepared for each of the following tests. The honeycomb structure portions Y had an average partition wall thickness of 2.5 mil (64 µm), an average partition wall pore diameter of 5 µm, a partition wall porosity of 47%, and a cell density of 300 cells/in² (47 cells/cm²). The honeycomb structure portion had a square cell cross-sectional shape and a specific heat of 0.76 kJ/(kg·K). The honeycomb structure had an open frontal area of 86% at the first end surface and the second end surface.

### [2-2. Preparation of honeycomb structure supporting CO₂ adsorbent B]

The CO₂ adsorbent B described in Test I was prepared, and added to ethanol so as to obtain a concentration of 20% by mass and was stirred to form a slurry. The honeycomb structure potion Y obtained above was immersed in the slurry, and after 1 minute, it was pulled out and vacuum dried at room temperature for 24 hours. After that, the same immersion and drying process was performed again to prepare a honeycomb structure supporting the CO₂ adsorbent B. The average thickness of the layer of the CO₂ adsorbent B was 100 µm. The area ratio of the surface of the partition walls covered with the CO₂ adsorbent B was 95%. The amount of the CO₂ adsorbent B supported on the honeycomb structure was about 1.0 g. The honeycomb structure had an open frontal area of 67% at the first end surface and the second end surface.

In addition, honeycomb structures supporting the CO₂ adsorbent B having average layer thicknesses of the CO₂ adsorbent B of 200 µm, 250 µm, 300 µm, and 350 µm, respectively, were prepared under the same conditions as above, except that the number of times the immersion and drying process was repeated was changed.

For the honeycomb structure prepared as described above, the average thickness (Average thickness) of the layer of CO₂ adsorbent B, the surface area ratio (Coverage rate) of the partition wall covered by CO₂ adsorbent B, the amount of supported CO₂ adsorbent B (Adsorbent amount), and the open frontal area (Open frontal area) at the first end surface and the second end surface are shown in Table 4.

**Table 4**

| Average thickness (µm) | Coverage rate (%) | Adsorbent amount (g) | Open frontal area (%) |
|---|---|---|---|
| 100 | 95 | 1.0 | 67 |
| 200 | 94 | 1.9 | 47 |
| 250 | 95 | 2.3 | 38 |
| 300 | 92 | 2.6 | 30 |
| 350 | 87 | 2.9 | 23 |

### (3. Measurement of CO₂ adsorption rate by honeycomb structure supporting CO₂ adsorbent)

Using each of the honeycomb structures supporting CO₂ adsorbent prepared above, a CO₂ adsorption test was carried out using the same test apparatus as in Test I. The test procedure was as follows. The honeycomb structure was placed in the chamber. With the fan rotating at 5 W to agitate the air in the chamber, humidified air with a relative humidity of 90% or more and a temperature of approximately 27 °C was circulated into the chamber at a flow rate of 12 L/min using the circulation pump, and CO₂ was desorbed from the honeycomb structure for 30 minutes (desorption process). Next, with the fan rotating at 5 W to agitate the air in the chamber, dry air with a relative humidity of about 5% and a temperature of about 28 °C was circulated from the air inlet into the chamber at a flow rate of 12 L/min, and CO₂ was adsorbed into the honeycomb structure for 60 minutes (adsorption process). The amount of CO₂ adsorption during the adsorption treatment was calculated from the change in CO₂ concentration in the chamber.

The results are shown in FIG. 6. The amount of CO₂ adsorption (molar number) per unit volume of the honeycomb structure was standardized by setting the value of a honeycomb structure in which the average thickness of the layer of the CO₂ adsorbent B was 100 µm as 1. It is seen from FIG. 6 that when the average thickness of the layer of the CO₂ adsorbent B is in the range of 30 to 250 µm, the amount of CO₂ adsorption per unit volume of the honeycomb structure increases.

### <Test IV. Relationship between open area ratio of honeycomb structure and the amount of CO₂ adsorption>

### (1. Preparation of honeycomb structure portion)

### [1-1. Preparation of honeycomb structure portion 1]

For the laboratory tests, a flow-through type honeycomb structure portion 1 made of cordierite of a rectangular parallelepiped shape measuring 20 mm × 20 mm × height (cell extension length) 10 mm and having both ends opened was prepared. The honeycomb structure portion 1 had an average partition wall thickness of 4.0 mil (102 µm), an average partition wall pore diameter of 5 µm, a partition wall porosity of 47%, and a cell density of 400 cells/in² (62 cells/cm²). The honeycomb structure portion 1 had a square cell cross-sectional shape, and the specific heat of the honeycomb structure portion 1 was 0.76 kJ/(kg·K).

### [1-2. Preparation of honeycomb structure portion 2]

For the laboratory tests, a flow-through type honeycomb structure portion 2 made of cordierite of a rectangular parallelepiped shape measuring 20 mm × 20 mm × height (cell extension length) 10 mm and having both ends opened was prepared. The honeycomb structure portion 2 had an average partition wall thickness of 3.5 mil (89 µm), an average partition wall pore diameter of 5 µm, a partition wall porosity of 47%, and a cell density of 400 cells/in² (62 cells/cm²). The honeycomb structure portion 2 had a square cell cross-sectional shape, and the specific heat of the honeycomb structure portion 2 was 0.76 kJ/(kg·K).

### [1-3. Preparation of honeycomb structure portion 3]

For the laboratory tests, a flow-through type honeycomb structure portion 3 made of cordierite of a rectangular parallelepiped shape measuring 20 mm × 20 mm × height (cell extension length) 10 mm and having both ends opened was prepared. The honeycomb structure portion 3 had an average partition wall thickness of 2.5 mil (64 µm), an average partition wall pore diameter of 5 µm, a partition wall porosity of 47%, and a cell density of 200 cells/in² (31 cells/cm²). The honeycomb structure portion 3 had a square cell cross-sectional shape, and the specific heat of the honeycomb structure portion 3 was 0.76 kJ/(kg·K).

### [1-4. Preparation of honeycomb structure portion 4]

For the laboratory tests, a flow-through type honeycomb structure portion 4 made of cordierite of a rectangular parallelepiped shape measuring 20 mm × 20 mm × height (cell extension length) 10 mm and having both ends opened was prepared. The honeycomb structure portion 4 had an average partition wall thickness of 2.5 mil (64 µm), an average partition wall pore diameter of 5 µm, a partition wall porosity of 47%, and a cell density of 300 cells/in² (47 cells/cm²). The honeycomb structure portion 4 had a square cell cross-sectional shape, and the specific heat of the honeycomb structure portion 4 was 0.76 kJ/(kg·K).

### [1-5. Preparation of honeycomb structure portion 5]

For the laboratory tests, a flow-through type honeycomb structure portion 5 made of cordierite of a rectangular parallelepiped shape measuring 20 mm × 20 mm × height (cell extension length) 10 mm and having both ends opened was prepared. The honeycomb structure portion 5 had an average partition wall thickness of 2.5 mil (64 µm), an average partition wall pore diameter of 5 µm, a partition wall porosity of 47%, and a cell density of 400 cells/in² (64 cells/cm²). The honeycomb structure portion 5 had a square cell cross-sectional shape, and the specific heat of the honeycomb structure portion 5 was 0.76 kJ/(kg·K).

### [1-6. Preparation of honeycomb structure portion 6]

For the laboratory tests, a flow-through type honeycomb structure portion 6 made of cordierite of a rectangular parallelepiped shape measuring 20 mm × 20 mm × height (cell extension length) 10 mm and having both ends opened was prepared. The honeycomb structure portion 6 had an average partition wall thickness of 2.5 mil (64 µm), an average partition wall pore diameter of 5 µm, a partition wall porosity of 47%, and a cell density of 600 cells/in² (93 cells/cm²). The honeycomb structure portion 6 had a square cell cross-sectional shape, and the specific heat of the honeycomb structure portion 6 was 0.76 kJ/(kg·K).

### [1-7. Preparation of honeycomb structure portion 7]

For the laboratory tests, a flow-through type honeycomb structure portion 7 made of cordierite of a rectangular parallelepiped shape measuring 20 mm × 20 mm × height (cell extension length) 10 mm and having both ends opened was prepared. The honeycomb structure portion 7 had an average partition wall thickness of 2.5 mil (64 µm), an average partition wall pore diameter of 5 µm, a partition wall porosity of 47%, and a cell density of 900 cells/in² (140 cells/cm²). The honeycomb structure portion 7 had a square cell cross-sectional shape, and the specific heat of the honeycomb structure portion 7 was 0.76 kJ/(kg·K).

### [1-8. Preparation of honeycomb structure portion 8]

For the laboratory tests, a flow-through type honeycomb structure portion 8 made of cordierite of a rectangular parallelepiped shape measuring 20 mm × 20 mm × height (cell extension length) 10 mm and having both ends opened was prepared. The honeycomb structure portion 8 had an average partition wall thickness of 2.5 mil (64 µm), an average partition wall pore diameter of 5 µm, a partition wall porosity of 47%, and a cell density of 1200 cells/in² (186 cells/cm²). The honeycomb structure portion 8 had a square cell cross-sectional shape, and the specific heat of the honeycomb structure portion 8 was 0.76 kJ/(kg·K).

### (2. Preparation of honeycomb structure supporting CO₂ adsorbent B)

The CO₂ adsorbent B described in Test I was prepared, and added to ethanol so as to obtain a concentration of 20% by mass. The mixture was stirred and mixed to form a slurry. The honeycomb structure portions 1 to 8 obtained above were immersed in the slurry, and after 1 minute, they were pulled out and vacuum dried at room temperature for 24 hours. After that, the same immersion and drying process was performed again to prepare honeycomb structures supporting the CO₂ adsorbent B. The average thickness of the layer of the CO₂ adsorbent B in each honeycomb structure was uniformly set to 100 µm. Based on the cell structure of the honeycomb structure portion, the mass when the average thickness of the layer of CO₂ adsorbent B was 100 µm was calculated in advance assuming a porosity of 50%, and the average thickness was adjusted to 100 µm by performing a immersion and drying process until that mass was reached. The area ratio of the partition wall surface covered with the CO₂ adsorbent B was 94%. Table 5 shows the mass of the CO₂ adsorbent B supported on each honeycomb structure and the open frontal area at the first end surface and the second end surface of each honeycomb structure.

### (3. Measurement of CO₂ adsorption amount by honeycomb structure supporting CO₂ adsorbent B)

Using the honeycomb structures supporting the CO₂ adsorbent B prepared above, a CO₂ adsorption test was carried out using the same test apparatus as in Test I. The test procedure was as follows. The honeycomb structure was placed in the chamber. With the fan rotating at 5 W to agitate the air in the chamber, humidified air with a relative humidity of 90% or more and a temperature of approximately 27 °C was circulated into the chamber at a flow rate of 12 L/min using the circulation pump, and CO₂ was desorbed from the honeycomb structure for 30 minutes (desorption process). Next, with the fan rotating at 5 W to agitate the air in the chamber, dry air with a relative humidity of about 5% and a temperature of about 28 °C was circulated from the air inlet into the chamber at a flow rate of 12 L/min, and CO₂ was adsorbed into the honeycomb structure for 60 minutes (adsorption process). The amount of CO₂ adsorption during the adsorption process was measured from the change in CO₂ concentration in the chamber.

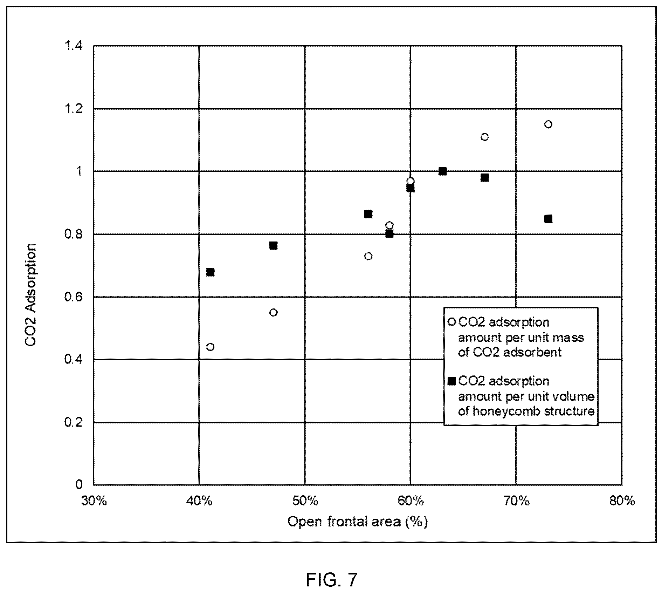

The results are shown in Table 5 and FIG. 7. The "CO₂ adsorption amount per unit mass of CO₂ adsorbent (moles)" and the "CO₂ adsorption amount per unit volume of honeycomb structure (moles)" were each standardized by setting the value of a test example using the honeycomb structure portion 5 with the layer of the CO₂ adsorbent B in which the open frontal area was 63% as 1. It can be seen that the higher the open frontal area of the first end surface and the second end surface of the honeycomb structure portion was, the higher the CO₂ adsorption amount per unit mass of the CO₂ adsorbent was, that is, the utilization rate of the CO₂ adsorbent supported on the honeycomb structure was increased. On the other hand, it can be seen that the CO₂ adsorption amount per unit volume of the honeycomb structure increased with the open frontal area up to about 65%, but decreased when the open frontal area became too high.

**Table 5**

| Test subject | Cell structure (partition wall thickness (in) / cell density (cpsi)) | Mass of suppored CO₂ adsorbent (g) | Open frontal area (%) | CO₂ adsorption amount per unit mass of CO₂ adsorbent | CO₂ adsorption amount per unit volume of honeycomb structure |
|---|---|---|---|---|---|
| Honeycomb structure portion 1 | 4/400 | 1.11 | 58% | 0.83 | 0.80 |
| Honeycomb structure portion 2 | 3.5/400 | 1.13 | 60% | 0.97 | 0.95 |
| Honeycomb structure portion 3 | 2.5/200 | 0.85 | 73% | 1.15 | 0.85 |
| Honeycomb structure portion 4 | 2.5/300 | 1.02 | 67% | 1.11 | 0.98 |
| Honeycomb structure portion 5 | 2.5/400 | 1.15 | 63% | 1 | 1 |
| Honeycomb structure portion 6 | 2.5/600 | 1.36 | 56% | 0.73 | 0.86 |
| Honeycomb structure portion 7 | 2.5/900 | 1.60 | 47% | 0.55 | 0.76 |
| Honeycomb structure portion 8 | 2.5/1200 | 1.78 | 41% | 0.44 | 0.68 |

While a high utilization rate of the CO₂ adsorbent supported on the honeycomb structure contributes to reducing the manufacturing cost, the actual CO₂ adsorption performance is determined by the amount of CO₂ adsorption per unit volume of the honeycomb structure. From the above results, it can be seen that the range of the open frontal area that provides an excellent balance between the utilization rate of the CO₂ adsorbent and the CO₂ adsorption performance is 60% to 70%, particularly 62% to 68%.

### Description of Reference Numerals

- 100:: Honeycomb structure supporting CO₂ adsorbent
- 102:: Outer peripheral side wall
- 104:: First end surface
- 106:: Second end surface
- 108:: Cell
- 112:: Partition wall
- 114:: Layer of CO₂ adsorbent

## Claims

1. A honeycomb structure supporting CO₂ adsorbent, comprising:
a honeycomb structure portion comprising partition walls extending from a first end surface to a second end surface and partitioning a plurality of cells which form fluid flow paths; and
a layer of CO₂ adsorbent covering at least a part of a surface of the partition walls, the layer of CO₂ adsorbent comprising an alkali metal carbonate supported on a porous material containing one or more selected from zeolite, alumina, and silica, a total content of zeolite, alumina, and silica being 50% by mass or more in the porous material.

2. The honeycomb structure supporting CO₂ adsorbent according to claim 1, wherein an average thickness of the CO₂ adsorbent layer is 30 µm to 250 µm.

3. The honeycomb structure supporting CO₂ adsorbent according to claim 1 or 2, wherein an open frontal area of the first end surface and the second end surface is 35% to 75%.

4. The honeycomb structure supporting CO₂adsorbent according to claim 1 or 2, wherein a specific heat of the partition walls is 0.6 kJ/(kg·K) or more.

5. The honeycomb structure supporting CO₂ adsorbent according to claim 1 or 2, wherein an average thickness of the partition walls is 40 to 440 µm and a cell density of the partition walls is 20 to 200 cells/cm².

6. The honeycomb structure supporting CO₂ adsorbent according to claim 1 or 2, wherein an open frontal area of the first end surface and the second end surface is 35% to 75%, an average thickness of the partition walls is 40 to 440 µm, and a cell density of the partition walls is 20 to 200 cells/cm².

7. The honeycomb structure supporting CO₂ adsorbent according to claim 1 or 2, wherein the partition walls are made of ceramics.

8. A method for recovering CO₂, comprising a step of causing a first gas having a first humidity to flow into the first end surface or the second end surface of the honeycomb structure supporting CO₂ adsorbent according to claim 1 or 2, so that CO₂ in the first gas is captured by the CO₂ adsorbent while the first gas passes through the plurality of cells, and the first gas with a reduced CO₂ concentration is caused to flow out from the end surface opposite to the inlet side.

9. The method for recovering CO₂ according to claim 8, comprising a step of causing a second gas having a second humidity higher than the first humidity, water, or a mixture thereof to flow into the first end surface or the second end surface of the honeycomb structure supporting CO₂ adsorbent, so that the CO₂ captured in the CO₂ adsorbent is desorbed from the CO₂ adsorbent while the second gas, the water or the mixture thereof passes through the plurality of cells and the second gas, the water or the mixture thereof with an increased CO₂ concentration is caused to flow out from the end surface opposite to the inlet side.

10. The method for recovering CO₂ according to claim 9, wherein a temperature of the second gas, the water or the mixture thereof to be caused to flow into the first end surface or the second end surface of the honeycomb structure supporting CO₂ adsorbent is 5 to 90 °C.

11. A method for manufacturing a honeycomb structure supporting CO₂ adsorbent, comprising:
a step A1 of preparing a honeycomb structure portion comprising partition walls extending from a first end surface to a second end surface and partitioning a plurality of cells which form fluid flow paths;
a step A2 of preparing a CO₂ adsorbent comprising an alkali metal carbonate supported on a porous material containing one or more selected from zeolite, alumina, and silica, a total content of zeolite, alumina, and silica being 50% by mass or more in the porous material; and
a step A3 of covering at least a part of a surface of the partition walls with the CO₂ adsorbent.

12. The method for manufacturing a honeycomb structure supporting CO₂ adsorbent according to claim 11, wherein the step A3 comprises a step of flowing a slurry containing the CO₂ adsorbent into the cells from the first end surface or the second end surface of the honeycomb structure portion.

13. A method for manufacturing a honeycomb structure supporting CO₂ adsorbent, comprising:
a step B1 of preparing a honeycomb structure portion comprising partition walls extending from a first end surface to a second end surface and partitioning a plurality of cells which form fluid flow paths;
a step B2 of preparing a porous material containing one or more selected from zeolite, alumina, and silica, a total content of zeolite, alumina, and silica being 50% by mass or more in the porous material;
a step B3 of covering at least a part of a surface of the partition walls with the porous material; and
a step B4 of supporting an alkali metal carbonate on the porous material covering at least a part of the surface of the partition walls.

14. The method for manufacturing a honeycomb structure supporting CO₂ adsorbent according to claim 13, wherein the step B3 comprises a step of flowing a slurry containing the porous material into the cells from the first end surface or the second end surface of the honeycomb structure portion.

15. The method for manufacturing a honeycomb structure supporting CO₂ adsorbent according to claim 13, wherein the step B4 comprises a step of flowing the aqueous solution of the alkali metal carbonate into the cells from the first end surface or the second end surface of the honeycomb structure portion.
